# EUROPÄISCHE PATENTSCHRIFT

(11) **EP 2 626 283 B1**
(45) Veröffentlichungstag und Bekanntmachung des Hinweises auf die Patenterteilung: **22.04.2015**
(21) Anmeldenummer: 13155061.8
(22) Anmeldetag: 13.02.2013
(51) Int. Cl.: B62H 5/14, B62K 19/30

(54) **Rahmenschloss**
Frame lock
Antivol de cadre

(30) Priorität: 13.02.2012 DE 102012002904
(43) Veröffentlichungstag der Anmeldung: 14.08.2013
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- GB-A- 114 582
- JP-A- 2001 048 072
- JP-U- H0 323 578
- NL-A- 7 316 748

## Beschreibung

Die vorliegende Erfindung betrifft ein Rahmenschloss für ein Zweirad, mit einem länglichen Schließbolzen, welcher an einer Schließbolzenhalterung zwischen einer Schließstellung und einer Öffnungsstellung entlang seiner Längsachse versetzbar gehalten ist.

Ein derartiges Rahmenschloss wird fest am Rahmen eines Zweirades montiert, beispielsweise an der Hinterradgabel. Der Schließbolzen ist mittels der Schließbolzenhalterung an dem einen Gabelrohr der Gabel angeordnet, wobei sich die Längsachse des Schließbolzens senkrecht zur Rotationsebene eines in der Gabel aufgenommenen Rades erstreckt. In der Schließstellung erstreckt sich der Schließbolzen zwischen den Speichen des Rades und blockiert so eine Drehbewegung des Rades. Beim Versetzen in die Öffnungsstellung wird der Schließbolzen so weit zurückgezogen, dass er das Rad für eine Drehbewegung freigibt.

Die JPA 2001048072 wird als nächstliegender Stand der Technik angesehen. Bekannten Rahmenschlössern der eingangs genannten Art sind jedoch hinsichtlich der Wartungsfreundlichkeit nicht optimal, da sie insbesondere bei Fahrrädern mit großem Reifenquerschnitt aufgrund ihrer oftmals begrenzten Öffnungsweite Wartungsarbeiten an der Bereifung beeinträchtigen. So erfordert der Aus- und Einbau des Rades unter Umständen eine vollständige Demontage des Rahmenschlosses.

Es ist die Aufgabe der vorliegenden Erfindung, ein verbessertes Rahmenschloss zu schaffen.

Die Lösung der Aufgabe erfolgt durch ein Rahmenschloss mit den Merkmalen des Anspruchs 1 und insbesondere dadurch, dass der Schließbolzen ausgehend von der Öffnungsstellung zusätzlich in eine der Schließstellung gegenüberliegende Wartungsstellung versetzbar ist. In der Wartungsstellung ist der Abstand des Schließbolzens von der Rotationsebene des Rades bzw. von den Radspeichen relativ zu der Öffnungsstellung vergrößert. Dies erleichtert insbesondere bei Rädern mit einem großem Reifenquerschnitt die Durchführung von Wartungsarbeiten, wie beispielsweise die Montage und Demontage des Rades oder einen Reifenwechsel, ohne dass das Rahmenschloss selbst vom Rahmen demontiert werden muss.

Bevorzugt weist das Rahmenschloss an der Schließbolzenhalterung ferner eine Verriegelungseinrichtung auf, die in eine Verriegelungsstellung verstellbar ist, um den Schließbolzen in dessen Schließstellung gegen ein Versetzen zu blockieren, wobei der Schließbolzen unabhängig von der Stellung der Verriegelungseinrichtung von der Öffnungsstellung in die Wartungsstellung versetzbar ist. Dadurch ist es möglich, die genannten Wartungsarbeiten auch ohne den Besitz eines zugehörigen Schlüssels durchzuführen. Ein Versetzen des Schließbolzens in die Wartungsstellung ist jedoch nur dann möglich, wenn sich der Schließbolzen in seiner Öffnungsstellung befindet. Somit beeinträchtigt das Vorhandensein der genannten Wartungsstellung die Sicherheit des Rahmenschlosses nicht. Die Verriegelungseinrichtung kann beispielsweise einen Riegel und einen Schließzylinder zur Betätigung des Riegels umfassen. Alternativ kann jedoch auch eine insbesondere fernbetätigbare elektromotorische oder elektromagnetische Verriegelungseinrichtung vorgesehen sein.

Gemäß einer vorteilhaften Ausführungsform der Erfindung weist das Rahmenschloss an der Schließbolzenhalterung ferner eine von der Verriegelungseinrichtung funktional unabhängige, d.h. von der Stellung der Verriegelungseinrichtung unabhängige Festlegeeinrichtung auf, die den Schließbolzen ausgehend von dessen Öffnungsstellung in Richtung der Wartungsstellung lösbar festlegt. Die Festlegeeinrichtung verhindert ein unbeabsichtigtes Versetzen des Schließbolzens in die Wartungsstellung.

Bevorzugt umfasst die Festlegeeinrichtung eine Rastverbindung. Eine solche Rastverbindung oder Rasteinrichtung lässt sich besonders einfach werkzeugfrei bedienen. Die Festlegeeinrichtung kann alternativ oder zusätzlich mittels eines Spezialwerkzeugs auslösbar sein, beispielsweise wenn die Festlegeeinrichtung ein federvorgespanntes Sperrglied aufweist.

Gemäß einer bevorzugten Ausführungsform weist die Schließbolzenhalterung eine Trägereinrichtung und eine Betätigungseinrichtung auf, an der der Schließbolzen versetzbar gehalten ist und die relativ zu der Trägereinrichtung zwischen einer Schließstellung, einer Öffnungsstellung und einer Wartungsstellung versetzbar ist, wobei die Verriegelungseinrichtung mit dem Schließbolzen, der Betätigungseinrichtung und der Trägereinrichtung derart zusammenwirkt, dass in der Schließstellung der Betätigungseinrichtung und der Schließstellung des Schließbolzens die Verriegelungseinrichtung in ihrer Verriegelungsstellung die Betätigungseinrichtung und den Schließbolzen gegen ein Versetzen relativ zu der Trägereinrichtung blockiert, und dass ausgehend von der Öffnungsstellung der Betätigungseinrichtung und der Öffnungsstellung des Schließbolzens die Betätigungseinrichtung gemeinsam mit dem Schließbolzen in die Wartungsstellung versetzbar ist, selbst wenn die Verriegelungseinrichtung sich in ihrer Verriegelungsstellung befindet. Die Trägereinrichtung ist rahmenfest angeordnet und wird beispielsweise durch ein separates Außengehäuse oder durch einen Abschnitt des Rahmens gebildet. Die vorstehend genannte Festlegeeinrichtung, insbesondere die Rastverbindung, wirkt beispielsweise zwischen der Betätigungseinrichtung und der Trägereinrichtung. Die Betätigungseinrichtung kann manuell bedienbar oder elektrisch antreibbar sein.

Vorzugsweise ist die Betätigungseinrichtung mit dem Schließbolzen derart gekoppelt, dass in der Schließstellung der Betätigungseinrichtung der Schließbolzen sich stets in seiner Schließstellung befindet, und dass in der Öffnungsstellung der Betätigungseinrichtung der Schließbolzen sich stets in seiner Öffnungsstellung befindet (bidirektionale Zwangsführung). Die Öffnungsstellung des Schließbolzens wird relativ zur Trägereinrichtung gesehen zur Wartungsstellung, sobald die Betätigungseinrichtung ausgehend von ihrer Öffnungsstellung in die Wartungsstellung versetzt wird. Die Wartungsstellung der Betätigungseinrichtung ist relativ zu ihrer Öffnungsstellung in der Öffnungsrichtung des Schließbolzens gelegen.

Gemäß einer Ausführungsform weist die Schließbolzenhalterung ferner eine Lagereinrichtung auf, wobei die Betätigungseinrichtung über die Lagereinrichtung indirekt an der Trägereinrichtung versetzbar gehalten ist.

Im Falle einer derartigen indirekten Lagerung ist die Betätigungseinrichtung vorzugsweise an der Lagereinrichtung zwischen ihrer Schließstellung und ihrer Öffnungsstellung versetzbar gehalten, wobei die Lagereinrichtung an der Trägereinrichtung zwischen einer Betriebsstellung und einer Wartungsstellung versetzbar gehalten ist, wobei die Verriegelungseinrichtung mit dem Schließbolzen, der Betätigungseinrichtung, der Lagereinrichtung und der Trägereinrichtung derart zusammenwirkt, dass in der Betriebsstellung der Lagereinrichtung, der Schließstellung der Betätigungseinrichtung und der Schließstellung des Schließbolzens die Verriegelungseinrichtung in ihrer Verriegelungsstellung die Lagereinrichtung, die Betätigungseinrichtung und den Schließbolzen gegen ein Versetzen relativ zu der Trägereinrichtung blockiert und dass ausgehend von der Betriebsstellung der Lagereinrichtung, der Öffnungsstellung der Betätigungseinrichtung und der Öffnungsstellung des Schließbolzens die Lagereinrichtung gemeinsam mit der Betätigungseinrichtung und dem Schließbolzen in die Wartungsstellung versetzbar ist, selbst wenn die Verriegelungseinrichtung sich in ihrer Verriegelungsstellung befindet. Die Lagereinrichtung ermöglicht ein besonders einfaches Verstellen des Schließbolzens und der Betätigungseinheit in die Wartungsstellung, ohne dass die Aufbruchsicherheit des Rahmenschlosses beeinträchtigt wird. Beispielsweise kann die Lagereinrichtung als ein Innengehäuse, in welchem die Betätigungseinrichtung versetzbar gelagert ist, und/oder die Trägereinrichtung als ein Außengehäuse ausgebildet sein, in welchem die Lagereinrichtung versetzbar gelagert ist. Die vorstehend genannte Festlegeeinrichtung, insbesondere die Rastverbindung, kann beispielsweise auch zwischen der Lagereinrichtung und der Trägereinrichtung wirksam sein.

Vorzugsweise ist die Verriegelungseinrichtung an der Betätigungseinrichtung vorgesehen, wobei die Verriegelungseinrichtung einen Schließzylinder und einen mittels des Schließzylinders zwischen einer Verriegelungsstellung und einer Entriegelungsstellung versetzbaren Riegel aufweist, wobei in der Schließstellung der Betätigungseinrichtung und in der Schließstellung des Schließbolzens der Riegel in seiner Verriegelungsstellung mit einem am Schließbolzen vorgesehenen jeweiligen Blockierabschnitt und einem an der Trägereinrichtung vorgesehenen Verriegelungsabschnitt zusammenwirkt. Dadurch ist eine besonders zuverlässige Blockierung des Rahmenschlosses gewährleistet.

Bevorzugt verläuft die Verstellrichtung des Riegels senkrecht zur Verstellrichtung des Schließbolzens, wodurch eine besonders zuverlässige Blockierung des Schließbolzens erreicht wird.

Gemäß einer weiteren vorteilhaften Ausführungsform ist die Betätigungseinrichtung mit dem Schließbolzen über eine Kopplungseinrichtung gekoppelt, die eine Betätigungsbewegung der Betätigungseinrichtung in eine sich von der Betätigungsbewegung unterscheidende Verstellbewegung des Schließbolzens umsetzt. Die Verstellbewegung des Schließbolzens kann sich hinsichtlich der Richtung und/oder der Weglänge von der Betätigungsbewegung der Betätigungseinrichtung unterscheiden. Die Kopplungseinrichtung erlaubt es, die Betätigungseinrichtung so anzuordnen, dass der Schließbolzen auf eine besonders ergonomische Weise verstellt werden kann. Weiterhin kann das Rahmenschloss so ausgestaltet werden, dass der längliche Schließbolzen einen großen, eine zuverlässige Freigabe der Bewegungsbahn der Radspeichen gewährleistenden Verstellweg zwischen der Schließstellung und der Öffnungsstellung zurücklegen kann, ohne dass in der Öffnungsstellung der Schließbolzen und/oder die die mit dem Schließbolzen gekoppelte Betätigungseinrichtung seitlich übermäßig weit über den Rahmen des Zweirades hinausragen.

Der Schließbolzen ist vorzugsweise ausschließlich linear bezüglich seiner Längsachse versetzbar, so dass sich der Aufbau des Rahmenschlosses, insbesondere die Anforderungen an eine Führung des Schließbolzens, besonders einfach gestalten. Der Schließbolzen weist bevorzugt einen runden Querschnitt auf, was sich im Hinblick auf die Sicherheit gegenüber gewaltsamen Öffnungsversuchen, bei denen ein Aufbruchwerkzeug am Schließbolzen angesetzt wird, als vorteilhaft erwiesen hat.

Gemäß einer Ausführungsform ist die Betätigungseinrichtung an der Schließbolzenhalterung linear versetzbar gehalten, wobei die Kopplungseinrichtung eine lineare Betätigungsbewegung der Betätigungseinrichtung in eine lineare Verstellbewegung des Schließbolzens umsetzt. Eine lineare Betätigung der Betätigungseinrichtung hat sich als besonders komfortabel erwiesen.

Vorzugsweise ist die lineare Betätigungsbewegung der Betätigungseinrichtung bezüglich der linearen Verstellbewegung des Schließbolzens parallel. Alternativ können die Betätigungsbewegung der Betätigungseinrichtung und die Verstellbewegung des Schließbolzens auch in einem Winkel, beispielsweise in einem 90°-Winkel, zueinander verlaufen.

Bevorzugt sind die lineare Betätigungsbewegung der Betätigungseinrichtung und die lineare Verstellbewegung des Schließbolzens gleichsinnig gerichtet. Eine solche Betätigung ist besonders intuitiv, da für ein Versetzen des Schließbolzens in eine gewünschte Richtung, beispielsweise von der Öffnungsstellung in die Schließstellung, ein Versetzen der Betätigungseinrichtung in diese Richtung erforderlich ist. Alternativ können die Betätigungsbewegung und die Verstellbewegung auch gegensinnig gerichtet sein. Dies hat den Vorteil, dass die Betätigungseinrichtung, insbesondere ein an der Betätigungseinrichtung gehaltener Schlüssel, in der Öffnungsstellung weniger weit von der Schließbolzenhalterung absteht. Dadurch ist gewährleistet, dass die Betätigungseinrichtung bzw. der Schlüssel den zur Betätigung der Pedale erforderlichen Bewegungsraum nur minimal einschränkt.

Gemäß einer weiteren vorteilhaften Ausführungsform übersetzt die Kopplungseinrichtung einen vorbestimmten Versetzweg der Betätigungseinrichtung in einen größeren Versetzweg des Schließbolzens, wobei das Übersetzungsverhältnis zwischen dem Versetzweg des Schließbolzens und dem Versetzweg der Betätigungseinrichtung größer als 1 ist und bevorzugt wenigstens 2 beträgt. Insbesondere kann das Übersetzungsverhältnis wenigstens 2,5 betragen. Die Kopplungseinrichtung bewirkt demnach eine Weglängenübersetzung, so dass die Betätigungseinrichtung zwischen ihrer Öffnungsstellung und ihrer Schließstellung im Vergleich zum entsprechenden Versetzweg des Schließbolzens nur einen geringeren Weg zurücklegen muss. Dies erhöht einerseits den Bedienkomfort und gewährleistet andererseits, dass die Betätigungseinrichtung in der Öffnungsstellung weniger weit vom Rahmen des Zweirades absteht.

Gemäß einer bevorzugten Ausführungsform umfasst die Kopplungseinrichtung zumindest einen schwenkbar an der Schließbolzenhalterung gelagerten Hebel, welcher gelenkig mit der Betätigungseinrichtung und dem Schließbolzen gekoppelt ist. Die Lagerung an der Schließbolzenhalterung umfasst sowohl eine direkte als auch eine indirekte Lagerung, was nachfolgend noch näher erläutert wird.

In diesem Zusammenhang ist es bevorzugt, wenn ein Endabschnitt des Hebels an der Schließbolzenhalterung gelagert ist, d.h. der Hebel als einseitiger Hebel ausgebildet ist und die Betätigungseinrichtung und der Schließbolzen bezüglich der Lagerung des Hebels an derselben Seite des Hebels angelenkt sind, so dass eine gleichsinnige Bewegung von Betätigungseinrichtung und Schließbolzen gegeben ist.

Grundsätzlich kann die Kopplungseinrichtung auch mehrere Hebel in einer Mehrgelenkanordnung, beispielsweise nach Art einer Kniehebelanordnung, umfassen, wobei der genannte Hebel dann mit der Betätigungseinrichtung und/oder dem Schließbolzen nur indirekt gekoppelt ist.

Gemäß einer weiteren vorteilhaften Ausführungsform umfasst die Kopplungseinrichtung einen Zahnstangenantrieb, welcher eine erste und eine zweite Zahnstange und zumindest ein mit den Zahnstangen kämmendes Zahnrad umfasst. Auch mit einem derartigen Zahnstangenantrieb ist auf einfache Weise eine Umsetzung der Betätigungsbewegung der Betätigungseinrichtung in die Verstellbewegung des Schließbolzens möglich, wobei sowohl eine Richtungsumlenkung als auch eine Weglängenübersetzung möglich sind.

Bevorzugt ist die erste Zahnstange an der Schließbolzenhalterung angeordnet, das Zahnrad drehbar an der Betätigungseinrichtung gelagert und die zweite Zahnstange an dem Schließbolzen angeordnet. Mit einer derartigen Anordnung kann insbesondere ein Übersetzungsverhältnis von 2 realisiert werden. Alternativ kann beispielsweise die erste Zahnstange an der Betätigungseinrichtung angeordnet, das Zahnrad drehbar an der Schließbolzenhalterung gelagert und die zweite Zahnstange an dem Schließbolzen angeordnet sein.

Das Zahnrad kann auch nur über einen Teil des Umfangs ausgebildet sein, wobei keine vollständige Umdrehung des Zahnrades vorgesehen ist. Weiterhin kann der Zahnstangenantrieb eine mehrstufige Übersetzung aufweisen. Dies kann z.B. durch Verwendung eines Doppelzahnrades, bei welchem ein kleines und ein großes Zahnrad koaxial und drehfest gekoppelt sind, erreicht werden, wobei das kleine Zahnrad mit der ersten Zahnstange und das große Zahnrad mit der zweiten Zahnstange kämmt. Schließlich kann auch eine zweiachsige Stirnradstufe mit zwei unterschiedlich großen Stirnrädern vorgesehen werden, die miteinander kämmen.

Gemäß einer weiteren bevorzugten Ausführungsform ist das Rahmenschloss zur Integration in eine Gabel eines Rahmens des Zweirads vorgesehen, insbesondere zur Integration in zumindest eine Durchbrechung eines Gabelrohrs. Bei der Gabel kann es sich beispielsweise um eine Hinterradgabel, aber auch um eine Vorderradgabel handeln. Die Integration des erfindungsgemäßen Rahmenschlosses in die Gabel bzw. in das oder die Gabelrohre ermöglicht eine besonders Platz sparende, optisch ansprechende und komfortabel zu bedienende Anordnung des Rahmenschlosses an dem Zweirad. Zudem ergibt sich durch die Integration in den Rahmen ein zusätzlicher Schutz vor Verschmutzung und insbesondere auch vor einem unbefugten und/oder gewaltsamen Öffnen des Rahmenschlosses. Die Gabel bzw. die Gabelrohre weisen im Bereich des Rahmenschlosses bevorzugt eine entsprechende Querschnittserweiterung auf. Die Durchbrechungen können dabei z.B. der Durchführung von Bauteilen der Schließbolzenhalterung, insbesondere der Betätigungseinrichtung und/oder des Schließbolzens dienen.

Gemäß einer Ausführungsform umfasst die Betätigungseinrichtung den Schließzylinder oder ist durch den Schließzylinder gebildet. Hierdurch ist eine besonders komfortable Einhandbedienung des Rahmenschlosses möglich.

Die Betätigungseinrichtung und/oder die Lagereinrichtung weisen vorzugsweise Führungsabschnitte zur linearen Führung des Schließbolzens auf.

Gemäß einer weiteren vorteilhaften Ausführungsform der Erfindung ist in der Schließstellung das distale Ende des Schließbolzens in einer Schließbolzenaufnahme aufgenommen. Unter dem distalen Ende des Schließbolzens wird das freie Ende des Schließbolzens verstanden, welches sich beim Versetzen zwischen der Schließstellung und der Öffnungsstellung zwischen den Radspeichen hindurch bewegt. Durch die Schließbolzenaufnahme wird ein unbefugtes und/oder gewaltsames Öffnen des Rahmenschlosses weiter erschwert. Insbesondere kann die Schließbolzenaufnahme an einem Gegenlager vorgesehen sein. Bei einer Integration der Schließbolzenhalterung in eine Gabel des Rahmens des Zweirades ist das Gegenlager bevorzugt ebenfalls in der Gabel des Rahmens, insbesondere in einer Durchbrechung des anderen Gabelrohrs integriert.

Bevorzugt umfasst die Schließbolzenaufnahme ein Lagerteil und ein Aufnahmeteil, wobei das Aufnahmeteil an dem Lagerteil zwischen einer Sicherungsstellung und einer Lösestellung versetzbar gelagert ist, wobei das Aufnahmeteil in seiner Sicherungsstellung an dem Lagerteil gegen ein Lösen gesichert und in seiner Lösestellung von dem Lagerteil lösbar ist, wobei das Aufnahmeteil eine Aufnahmeöffnung aufweist, in die der Schließbolzen eingreift, wenn der Schließbolzen sich in seiner Schließstellung und das Aufnahmeteil sich in seiner Sicherungsstellung befindet, wobei der in die Aufnahmeöffnung eingreifende Schließbolzen das Aufnahmeteil gegen ein Versetzen aus der Sicherungsstellung in die Lösestellung blockiert. Bei geöffnetem Schließbolzen kann das Aufnahmeteil von dem üblicherweise rahmenfest angeordneten Lagerteil gelöst werden, um Wartungsarbeiten wie eine Montage oder Demontage des Rades oder einen Wechsel der Bereifung durchführen zu können. In der Schließstellung des Schließbolzens hingegen werden ein Entfernen des Aufnahmeteils und damit eine Manipulation des Schlosses wirksam verhindert. Die Befestigung des Aufnahmeteils am Lagerteil in der Sicherungsstellung erfolgt insbesondere formschlüssig. Damit, wenn der Schließbolzen sich in der Öffnungsstellung befindet, das Aufnahmeteil nicht versehentlich aus seiner Sicherungsstellung in die Lösestellung versetzt wird, kann das Aufnahmeteil an dem Lagerteil beispielsweise mittels einer Rastverbindung in der Sicherungsstellung lösbar festlegt sein.

Vorzugsweise ist das Aufnahmeteil an dem Lagerteil zwischen der Sicherungsstellung und der Lösestellung um eine Drehachse drehbar gelagert, wobei die Drehachse bezüglich der Aufnahmeöffnung des Aufnahmeteils und/oder der Längsachse des Schließbolzens versetzt ist. Die Befestigung kann beispielsweise durch eine Verschraubung oder eine Bajonettverriegelung erfolgen. Durch den Versatz zwischen der Drehachse und der Aufnahmeöffnung bzw. der Längsachse des Schließbolzens fluchtet der Schließbolzen nur bei befestigtem Aufnahmeteil mit der Aufnahmeöffnung. Dadurch ist ein Verdrehen des Aufnahmeteils zum Lösen der Verbindung bei in der Aufnahmeöffnung aufgenommenem Schließbolzen nicht möglich.

Grundsätzlich kann das Aufnahmeteil auch auf andere Weise an dem Lagerteil befestigt sein. So kann das Aufnahmeteil beispielsweise linear versetzbar, beispielsweise mit Hilfe einer Schwalbenschwanzführung, an dem Aufnahmeteil angeordnet sein. Die Versetzrichtung kann axial oder lateral zur Verstellrichtung des Schließbolzens verlaufen.

Gemäß einer weiteren vorteilhaften Ausführungsform umfasst die genannte Schließbolzenaufnahme ein Lagerteil, ein Aufnahmeteil und ein Sperrglied, welches zwischen einer Freigabestellung und einer Sperrstellung versetzbar ist, wobei das Sperrglied in seiner Freigabestellung das Aufnahmeteil für ein Lösen von dem Lagerteil freigibt und in seiner Sperrstellung das Aufnahmeteil gegen ein Lösen von dem Lagerteil sperrt, beispielsweise durch einen formschlüssigen Eingriff oder durch ein Hintergreifen. Der Schließbolzen des Rahmenschlosses blockiert in seiner Schließstellung das Sperrglied in der Sperrstellung. Insbesondere kann der Schließbolzen mit dem Sperrglied der Schließbolzenaufnahme derart zusammenwirken, dass durch Versetzen des Schließbolzens in die Schließstellung der Schließbolzen das Sperrglied in die Sperrstellung versetzt und in der Sperrstellung blockiert. Beispielsweise kann das Aufnahmeteil der Schließbolzenaufnahme eine Aufnahmeöffnung aufweisen, in die der Schließbolzen eingreift, wenn der Schließbolzen sich in seiner Schließstellung befindet, wobei der Schließbolzen beim Einführen in die Aufnahmeöffnung das Sperrglied zu einer Bewegung in die Sperrstellung antreibt. Hierfür können geeignete Führungsschrägen an dem Schließbolzen und an dem Sperrglied vorgesehen sein.

Auch bei dieser Ausführungsform ist das Aufnahmeteil der Schließbolzenaufnahme also an dem Lagerteil lösbar gehalten. Bei geöffnetem Schließbolzen kann das Aufnahmeteil von dem üblicherweise rahmenfest angeordneten Lagerteil gelöst werden, um Wartungsarbeiten wie eine Montage oder Demontage des Rades oder einen Wechsel der Bereifung durchführen zu können. In der Schließstellung des Schließbolzens hingegen werden ein Entfernen des Aufnahmeteils und damit eine Manipulation des Schlosses wirksam verhindert. Das Sperrglied kann an dem Aufnahmeteil oder an dem Lagerteil versetzbar gelagert sein, insbesondere in einer Richtung quer zu der Längsachse des Schließbolzens. Vorzugsweise ist das Sperrglied in Richtung seiner Freigabestellung vorgespannt. Damit, wenn der Schließbolzen sich in der Öffnungsstellung befindet, das Aufnahmeteil der Schließbolzenaufnahme nicht versehentlich von dem Lagerteil gelöst wird, kann das Aufnahmeteil an dem Lagerteil beispielsweise mittels einer Rastverbindung lösbar festlegt sein.

Die vorliegende Erfindung bezieht sich unabhängig von dem erläuterten Versetzen des Schließbolzens in eine Wartungsstellung generell auch auf ein gattungsgemäßes Rahmenschloss mit einer derartigen Schließbolzenaufnahme.

Weitere vorteilhafte Ausführungsformen der Erfindung sind in den Unteransprüchen, der Beschreibung und den Zeichnungen genannt.

Die Erfindung wird nachfolgend beispielhaft mit Bezug auf die Zeichnungen beschrieben.

Es zeigen:
- Fig. 1 bis 3: perspektivische Ansichten eines an einem Zweirad befestigten erfindungsgemäßen Rahmenschlosses gemäß einem Ausführungsbeispiel in der Schließstellung, der Öffnungsstellung und der Wartungsstellung;
- Fig. 4: eine perspektivische Ansicht der Schließbolzenhalterung des Rahmenschlosses in Explosionsdarstellung;
- Fig. 5 und 6: weitere perspektivische Schnittansichten der Schließbolzenhalterung in der Schließstellung und der Öffnungsstellung;
- Fig. 7 und 8: perspektivische Schnittansichten der Schließbolzenhalterung in der Schließstellung und der Öffnungsstellung;
- Fig. 9 und 10: Schnittansichten der Schließbolzenhalterung in der Schließstellung und der Öffnungsstellung;
- Fig. 11 bis 13: Schnittansichten der Schließbolzenhalterung, welche eine Abwandlung einer Kopplungseinrichtung aufweist, in der Schließstellung, der Öffnungsstellung und der Wartungsstellung; und
- Fig. 14: eine perspektivische Ansicht eines an einem Zweirad befestigten erfindungsgemäßen Rahmenschlosses gemäß einer weiteren Abwandlung.

Nachfolgend wird ein Ausführungsbeispiel eines erfindungsgemäßen Rahmenschlosses einschließlich verschiedener Abwandlungen von einzelnen Komponenten beschrieben. Zum besseren Verständnis sind gleichartige Teile des Rahmenschlosses mit denselben Bezugszeichen versehen.

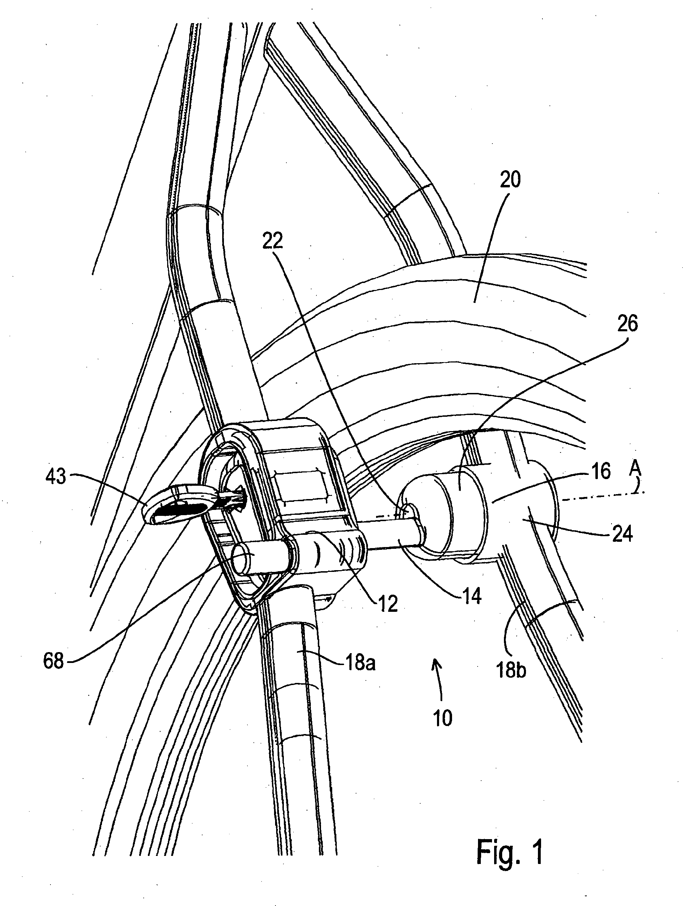

Gemäß Fig. 1 bis 3 umfasst ein erfindungsgemäßes Rahmenschloss 10 eine Schließbolzenhalterung 12, an welcher ein länglicher Schließbolzen 14 zwischen einer Schließstellung und einer Öffnungsstellung entlang seiner Längsachse versetzbar gehalten ist. Die Schließbolzenhalterung 12 ist an einem Gabelrohr 18a eines nur abschnittsweise dargestellten Zweirades befestigt bzw. in das Gabelrohr 18a integriert.

Das Rahmenschloss 10 umfasst eine Schließbolzenaufnahme 16, welche an einem dem Gabelrohr 18a gegenüberliegenden Gabelrohr 18b befestigt ist. Die Schließbolzenaufnahme 16 umfasst ein am Gabelrohr 18b befestigtes oder in das Gabelrohr 18b integriertes Lagerteil 24, an welchem ein Aufnahmeteil 26 lösbar gehalten ist, das eine exzentrisch angeordnete Aufnahmeöffnung 22 aufweist.

Der Schließbolzen 14 erstreckt sich in seiner Schließstellung (Fig. 1) zwischen die Speichen (nicht dargestellt) eines zwischen den Gabelrohren 18a, 18b gehaltenen Rades 20. Das distale Ende 15 des Schließbolzens 14 ist in der an der Schließbolzenaufnahme 16 ausgebildeten Aufnahmeöffnung 22 aufgenommen.

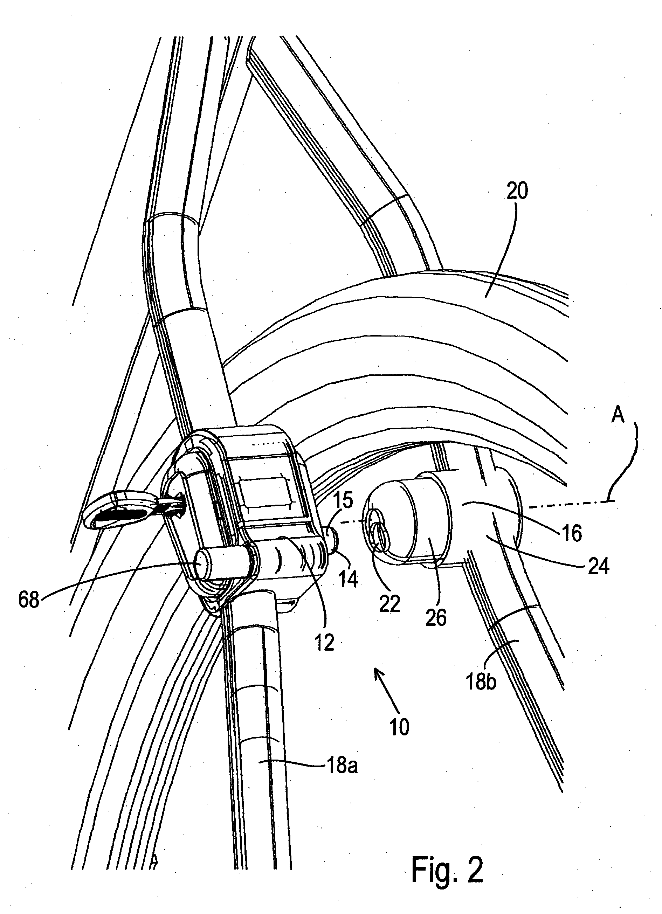

In seiner Öffnungsstellung (Fig. 2) ist der Schließbolzen 14 in das Innere der Schließbolzenhalterung 12 im Wesentlichen zurückgezogen, so dass das Rad 20 für eine Drehbewegung freigegeben ist.

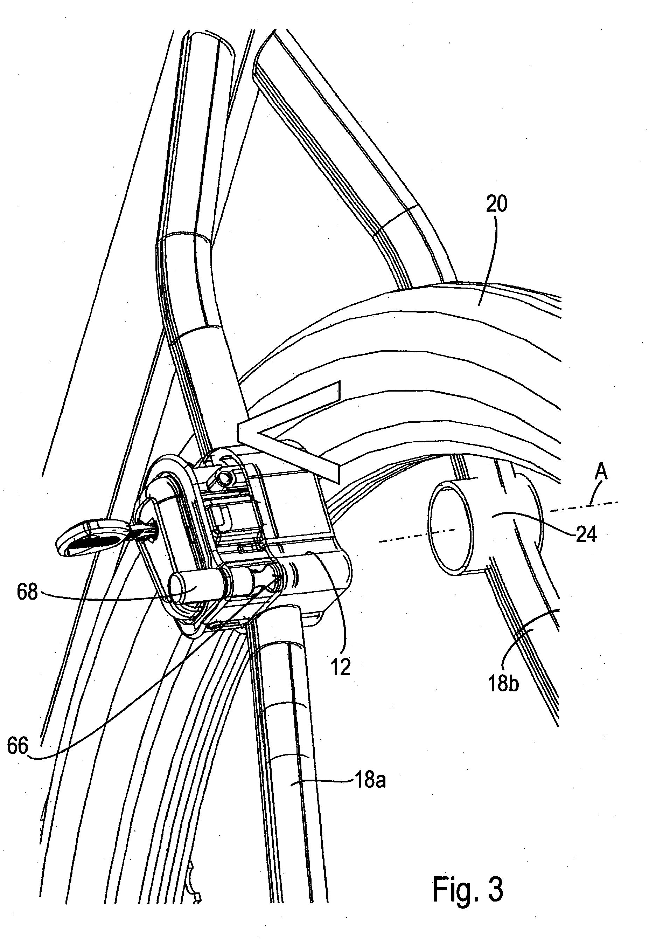

Um eine Montage oder Demontage des Rades 20 oder einen Wechsel der Bereifung zu ermöglichen, kann das Rahmenschloss 10 zusätzlich in eine Wartungsstellung (Fig. 3) versetzt werden. Hierfür kann ausgehend von der Öffnungsstellung (Fig. 2) der Schließbolzen 14 in eine der Schließstellung gegenüberliegende Wartungsstellung versetzt werden, und alternativ oder zusätzlich kann das Aufnahmeteil 26 der Schließbolzenaufnahme 16 vom Lagerteil 24 gelöst werden. In der Wartungsstellung ist im Vergleich zur Öffnungsstellung der Abstand zwischen dem distalen Ende 15 des Schließbolzens 14 und der Schließbolzenaufnahme 16 vergrößert. Das Verstellen des Schließbolzens 14 in die Wartungsstellung und das Lösen des Aufnahmeteils 26 werden nachfolgend noch näher erläutert.

Mit Bezug auf Fig. 1 bis 13 wird zunächst der Aufbau der Schließbolzenhalterung 12 näher erläutert.

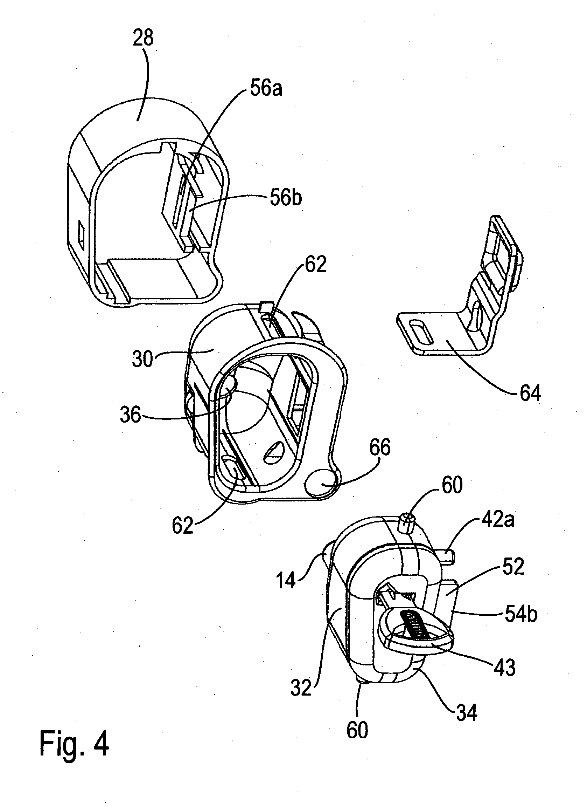

Die Schließbolzenhalterung 12 umfasst eine zweiseitig offene, d.h. hülsenartige Trägereinrichtung 28, welche am Gabelrohr 18a rahmenfest angeordnet ist (Fig. 4). Die Trägereinrichtung 28 kann auch als integraler Bestandteil des Gabelrohrs 18a ausgebildet sein. Im Inneren der Trägereinrichtung 28 ist eine schalenförmige Lagereinrichtung 30 entlang der Längsachse des Schließbolzens 14 versetzbar gehalten. Die Lagereinrichtung 30 weist eine Öffnung 36 als Durchführung für den Schließbolzen 14 auf.

Im Inneren der Lagereinrichtung 30 ist eine Betätigungseinrichtung 32 ebenfalls entlang der Längsachse des Schließbolzens 14 versetzbar gehalten. Die Betätigungseinrichtung 32 umfasst ein mehrteiliges, im Wesentlichen geschlossenes Gehäuse 34, in welchem der Schließbolzen 14 entlang seiner Längsachse zwischen seiner Schließstellung und seiner Öffnungsstellung versetzbar gehalten ist. Die Betätigungseinrichtung 32 weist an ihrer Außenseite zwei Zapfen 60 auf, die in entsprechenden an der Lagereinrichtung 30 vorgesehenen Langlöchern 62 geführt sind, wobei die Länge der Langlöcher 62 den Versetzweg der Betätigungseinrichtung 32 begrenzen.

Die Betätigungseinrichtung 32 und/oder der Schließbolzen 14 können mittels Federkraft in Richtung ihrer Öffnungsstellung vorgespannt sein.

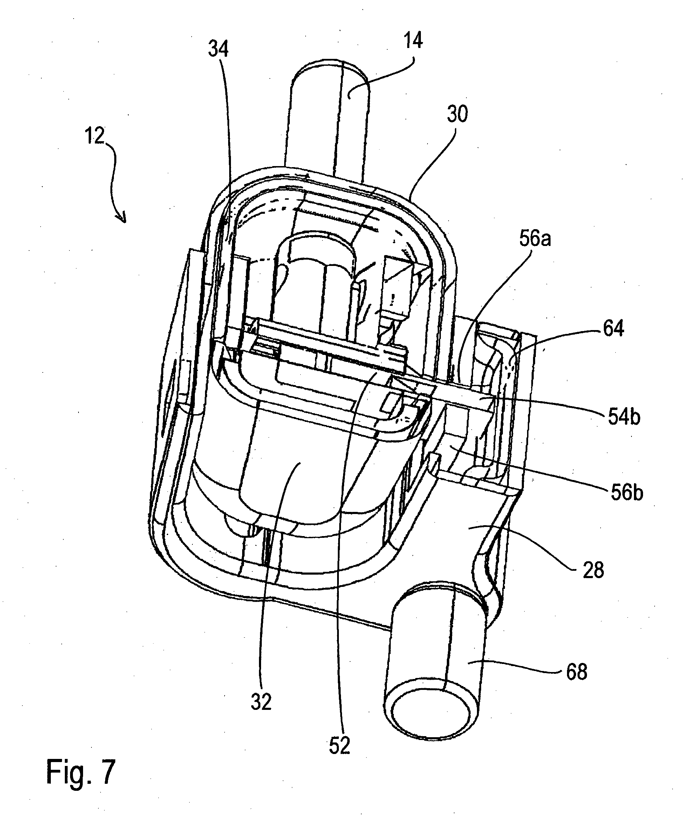

An der Lagereinrichtung 30 ist ferner eine Klobenaufnahme 66 (Fig. 4) zur Aufnahme und Sicherung eines mit einer Ringnut versehenen Klobens 68 (Fig. 7) einer zusätzlichen Seilsicherung vorgesehen. Die Sicherung des Klobens 68 in der Klobenaufnahme 66 erfolgt in an sich bekannter Weise mittels einer lateral zum Kloben 68 versetzbaren Verriegelungskugel (nicht dargestellt), welche mit einer U-förmigen Haube 69 des Gehäuses 14 zusammenwirkt. Zu diesem Zweck wird die Haube 69 zusammen mit der Betätigungseinrichtung 32 zwischen der Öffnungsstellung und der Schließstellung bewegt, wobei in der Öffnungsstellung die Verriegelungskugel in eine Aussparung der Haube 69 zurückweichen kann, um den Kloben 68 in die Klobenaufnahme 66 einführen oder aus der Klobenaufnahme 66 entnehmen zu können, und wobei in der Schließstellung die Verriegelungskugel in die Klobenaufnahme 66 gedrängt ist, um dort in eine am Kloben 68 vorgesehene Ringnut einzugreifen und den Kloben 68 in der Klobenaufnahme 66 zu sichern. Die Haube 69 schützt hierbei die nachstehend noch erläuterte Verriegelungseinrichtung der Schließbolzenhalterung 12.

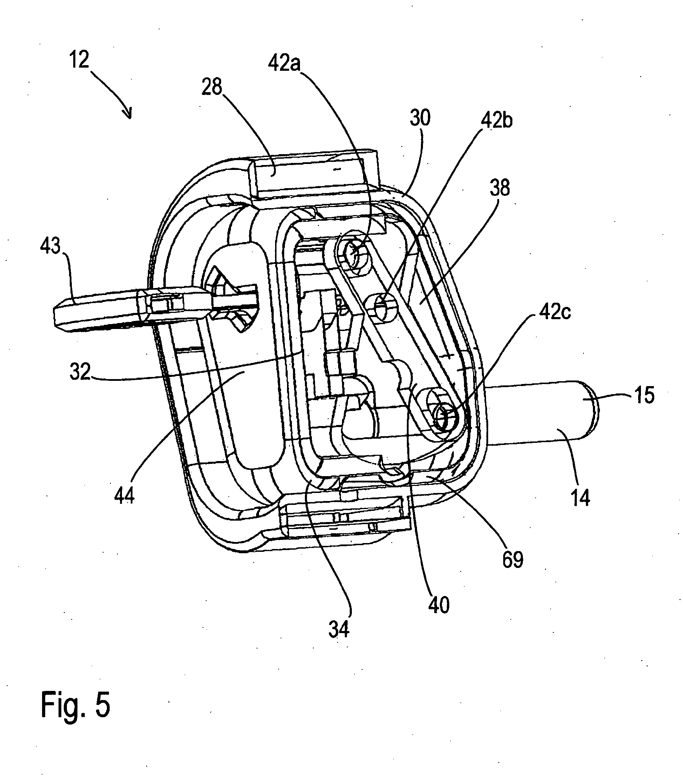

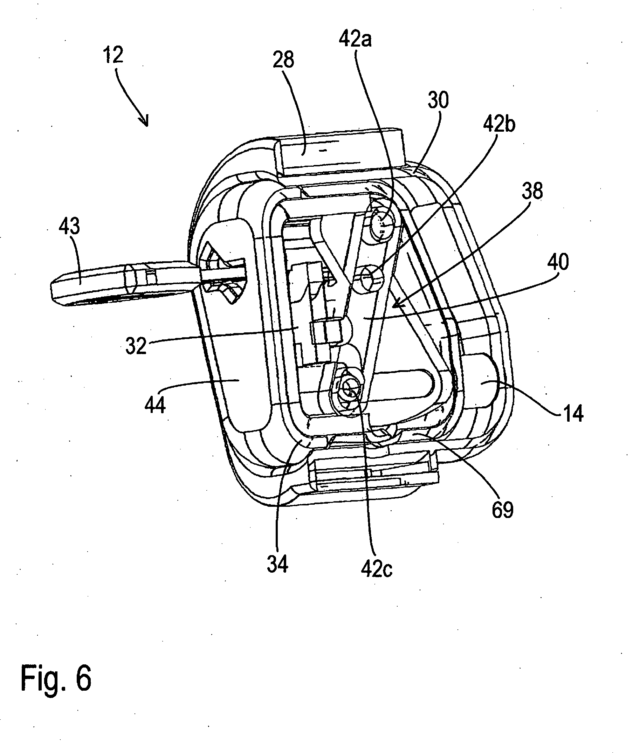

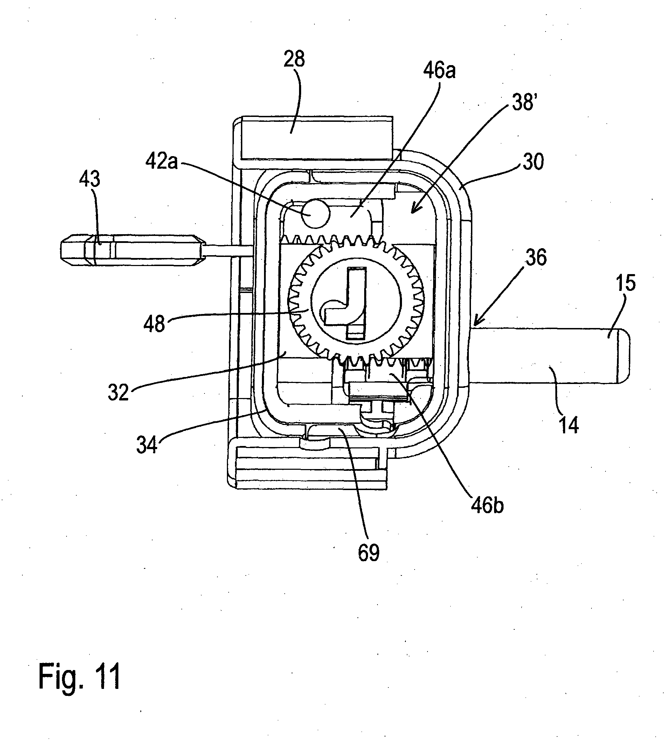

Innerhalb des Gehäuses 34 ist eine Kopplungseinrichtung 38 (Fig. 5 und 6) bzw. 38' (Fig. 11 bis 13) vorgesehen, über welche der Schließbolzen 14 mit der Betätigungseinrichtung 32 gekoppelt ist, um eine Betätigungsbewegung der Betätigungseinrichtung 32 in eine Verstellbewegung des Schließbolzens 14 umzusetzen. Die Betätigungseinrichtung 32 ist mittels der Kopplungseinrichtung 38 bzw. 38' mit dem Schließbolzen 14 derart gekoppelt, dass in der Schließstellung der Betätigungseinrichtung 32 der Schließbolzen 14 sich stets in seiner Schließstellung befindet (Fig. 1), und dass in der Öffnungsstellung der Betätigungseinrichtung 32 der Schließbolzen 14 sich stets in seiner Öffnungsstellung befindet (Fig. 2).

Gemäß Fig. 5 (Schließstellung) und Fig. 6 (Öffnungsstellung) umfasst die Kopplungseinrichtung 38 einen Hebel 40, welcher an einem ersten Stift 42a schwenkbar gelagert ist. Der Stift 42a erstreckt sich seitlich durch ein am Gehäuse 34 ausgebildetes Langloch (nicht dargestellt) hindurch und ist in einer an der Lagereinrichtung 30 ausgebildeten Öffnung (nicht dargestellt) gehalten. Ein zweiter Stift 42b ist in einer vom Stift 42a beabstandeten Öffnung des Hebels 40 aufgenommen und am Gehäuse 34 der Betätigungseinrichtung 32 gehalten. Schließlich ist in einer weiteren Öffnung des Hebels 40 ein dritter Stift 42c aufgenommen, welcher am Schließbolzen 14 gehalten ist.

Zum Verstellen des Schließbolzens 14 von seiner Öffnungsstellung (Fig. 6) in seine Schließstellung (Fig. 5) wird durch einen Benutzer eine axiale Kraft auf einen Schlüssel 43 oder eine an einer Außenseite der Betätigungseinrichtung 32 ausgebildete Betätigungsfläche 44 ausgeübt, wodurch die Betätigungseinrichtung 32 weiter in das Innere der Lagereinrichtung 30 hinein versetzt wird. Die Lagereinrichtung 30 bleibt hierbei ortsfest relativ zu der Trägereinrichtung 28. Die lineare Verstellbewegung der Betätigungseinrichtung 32 wird über den Stift 42b auf den Hebel 40 übertragen. Dadurch wird der Hebel 40 um seine Schwenkachse, die durch den an der Lagereinrichtung 30 festgelegten Stift 42a definiert ist, verschwenkt. Da der Abstand des am Schließbolzen 14 vorgesehenen Stifts 42c von der Schwenkachse des Hebels 40 etwa 2,5 bis 3 mal so groß ist wie der Abstand des an der Betätigungseinrichtung 32 angeordneten Stifts 42b von der Schwenkachse des Hebels 40, wird ein bestimmter Versetzweg der Betätigungseinrichtung 32 in einen entsprechend etwa 2,5-bis 3-fach größeren Versetzweg des Schließbolzens 14, übersetzt.

Um geringfügige Distanzänderungen, die bei der Umwandlung von Linearbewegungen in die Schwenkbewegung des Hebels 40 und umgekehrt entstehen, ausgleichen zu können, sind die im Hebel 40 zur Aufnahme der Stifte 42a und 42c vorgesehenen Öffnungen als Langlöcher ausgebildet.

Mit Bezug auf Fig. 11 bis 13 wird die Kopplungseinrichtung 38' gemäß der vorstehend erwähnten Abwandlung erläutert. Die in Fig. 11 bis 13 dargestellte Schließbolzenhalterung 12 unterscheidet sich von der in Fig. 5 bis 10 dargestellten Schließbolzenhalterung 12 im Wesentlichen durch die Kopplungseinrichtung 38', so dass eine Erläuterung weiterer, in den Zeichnungen ersichtlicher geringfügiger Unterschiede entbehrlich ist.

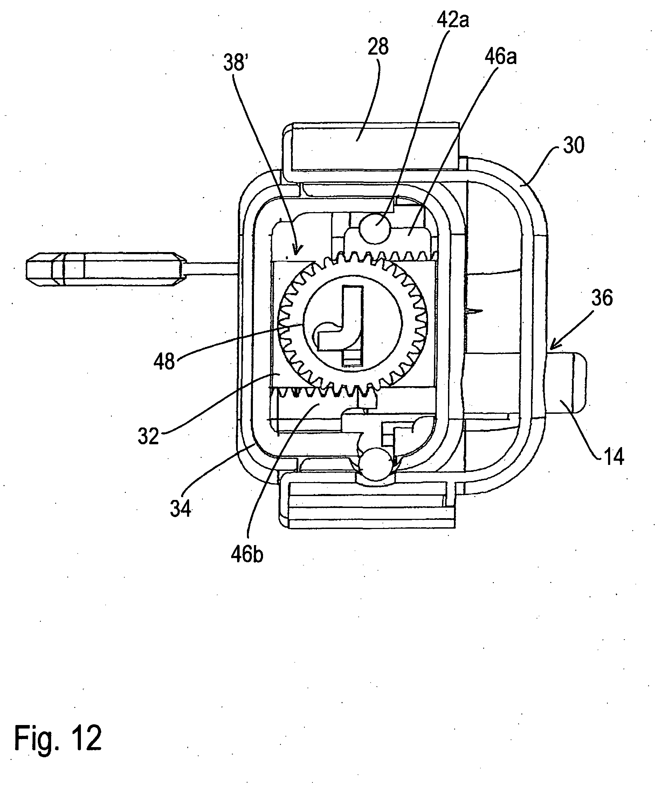

Die Kopplungseinrichtung 38' gemäß Fig. 11 bis 13 umfasst einen Zahnstangenantrieb mit einer ersten und einer zweiten Zahnstange 46a bzw. 46b und ein mit den Zahnstangen 46a, 46b kämmendes Zahnrad 48. Die erste Zahnstange 46a ist über einen seitlich aus dem Gehäuse 34 herausragenden Stift 42a mit der Lagereinrichtung 30 fest verbunden, während die zweite Zahnstange 46b an dem Schließbolzen 14 fest angeordnet ist. Das Zahnrad 48 ist drehbar an der Betätigungseinrichtung 32 gehalten, d.h. bei einem Verstellen der Betätigungseinrichtung 32 wird die Drehachse des Zahnrads 48 relativ zu der Lagereinrichtung 30 versetzt. Wie ein Vergleich der Schließstellung des Schließbolzens 14 (Fig. 11) mit seiner Öffnungsstellung (Fig. 12) zeigt, ermöglicht die Kopplungseinrichtung 38' ein Übersetzungsverhältnis von 2 zwischen dem Versetzweg des Schließbolzens 14 und dem Versetzweg der Betätigungseinrichtung 32. Hinsichtlich ihrer Wirkung unterscheidet sich die Kopplungseinrichtung 38' im Übrigen nicht von der vorstehenden Kopplungseinrichtung 38.

Wie insbesondere in Fig. 5 bis 10 zu erkennen ist, ist im Inneren des Gehäuses 34 der Betätigungseinrichtung 32 eine Verriegelungseinrichtung vorgesehen, welche einen mittels des Schlüssels 43 betätigten Schließzylinder 50 und einen Riegel 52 aufweist, der mittels des Schließzylinders 50 zwischen einer Verriegelungsstellung und einer Entriegelungsstellung versetzbar ist. Die Versetzrichtung des Riegels 52 verläuft senkrecht zur Längsachse des Schließbolzens 14. Der Riegel 52 kann mittels einer Feder (nicht dargestellt) in Richtung seiner Entriegelungsstellung vorgespannt sein. In der Entriegelungsstellung des Riegels 52 sind der Schließbolzen 14 und die Betätigungseinrichtung 32 relativ zu der Trägereinrichtung 28 zwischen der Öffnungsstellung und der Schließstellung versetzbar.

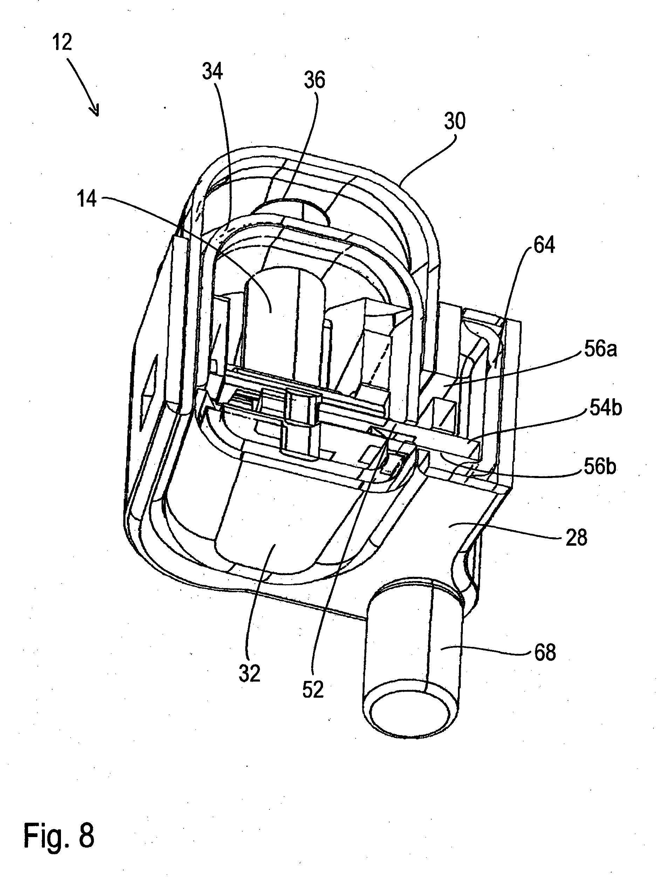

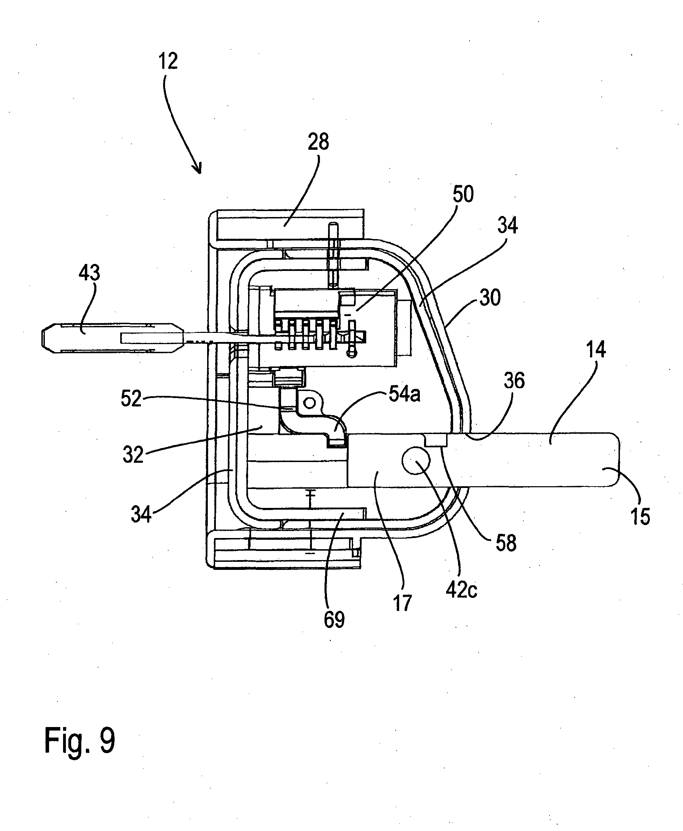

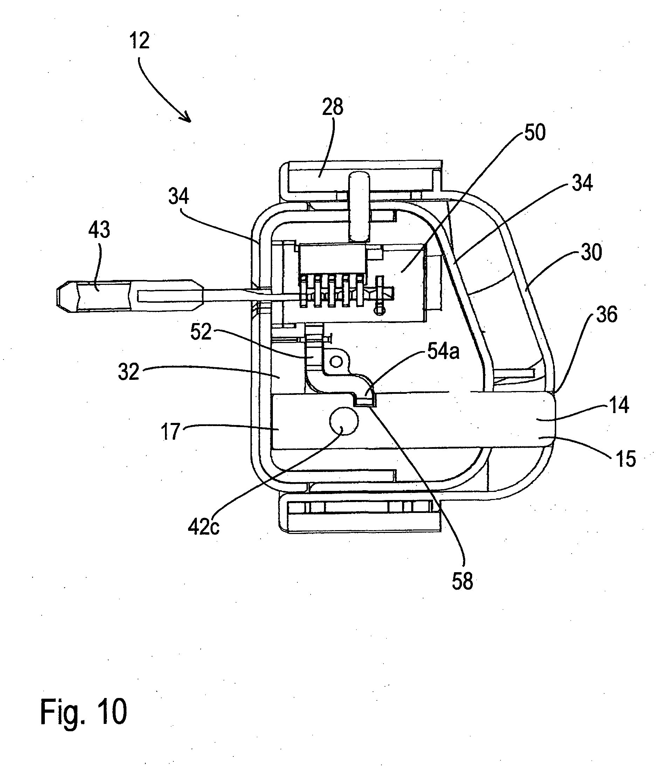

Der Riegel 52 besitzt einen ersten Verriegelungsabschnitt 54a (Fig. 9 und 10), der mit einem jeweiligen Blockierabschnitt des Schließbolzen 14 zusammenwirkt, und einen zweiten Verriegelungsabschnitt 54b (Fig. 7 und 8), welcher mit der Trägereinrichtung 28 zusammenwirkt.

In der Schließstellung des Schließbolzens 14 und in der Verriegelungsstellung des Riegels 52 hintergreift der Verriegelungsabschnitt 54a das als ein erster Blockierabschnitt dienende proximale Ende 17 des Schließbolzens 14 (Fig. 9), während der Verriegelungsabschnitt 54b in eine an der Trägereinrichtung 28 ausgebildete, als korrespondierender Verriegelungsabschnitt dienende erste Riegelaufnahme 56a eingreift (Fig. 4 und 7). Hierdurch sind der Schließbolzen 14 und die Betätigungseinrichtung 32 in der Schließstellung gesichert, d.h. gegen ein Versetzen in die Öffnungsstellung blockiert.

Um ein versehentliches Versetzen des Schließbolzens 14 von der Öffnungsstellung in die Schließstellung während des Betriebs des Zweirades zu verhindern, kann der Schließbolzen 14 auch in seiner Öffnungsstellung in Richtung der Schließstellung blockiert werden. Hierbei greift in der Verriegelungsstellung des Riegels 52 der Verriegelungsabschnitt 54a in eine am Schließbolzen 14 ausgebildete, als ein zweiter Blockierabschnitt dienende Nut 58 ein (Fig. 10), während der Verriegelungsabschnitt 54b eine an der Trägereinrichtung 28 ausgebildete, als weiterer korrespondierender Verriegelungsabschnitt dienende zweite Riegelaufnahme 56b hintergreift (Fig. 4 und 8).

Zwischen der Trägereinrichtung 28 und der Lagereinrichtung 30 ist ferner ein die Riegelaufnahmen 56a, 56b überdeckendes Verstärkungsblech 64 (siehe insbesondere Fig. 4, 7 und 8) angeordnet, welches als zusätzlicher Schutz gegen gewaltsame Öffnungsversuche dient.

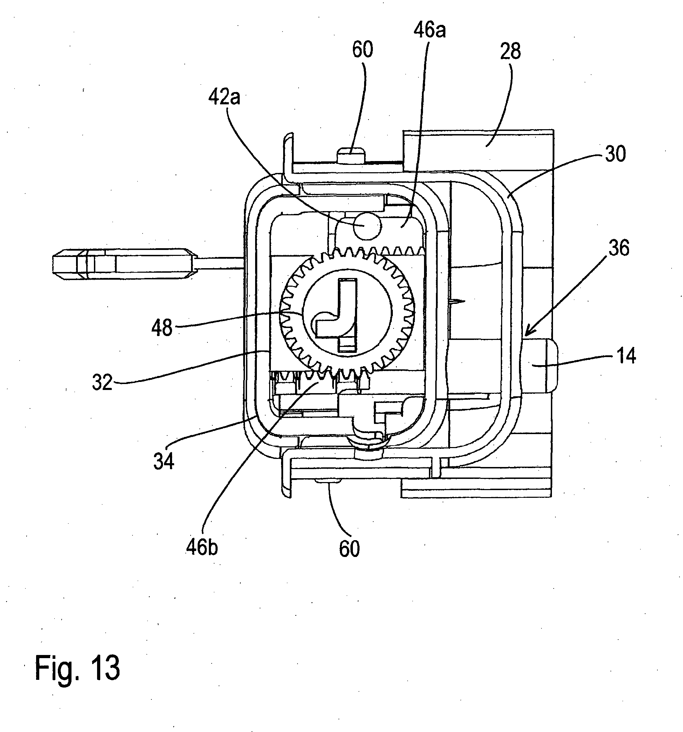

Die Riegelaufnahme 56b ist einseitig offen, so dass in der Öffnungsstellung des Rahmenschlosses 10 der Riegel 52 in seiner Verriegelungsstellung die Betätigungseinrichtung 32 zwar gegen ein Versetzen in die Schließstellung blockiert, nicht jedoch gegen ein Versetzen in die bereits genannte Wartungsstellung (Fig. 3 und 13). Dadurch ist es möglich, auch ohne ein Entriegeln die die Betätigungseinrichtung 32, den Schließbolzen 14 und die Lagereinrichtung 30 umfassende Einheit in die Wartungsstellung zu versetzen.

In der Wartungsstellung (Fig. 3 und 13) ist die Einheit aus Betätigungseinrichtung 32, Schließbolzen 14 und Lagereinrichtung 30 relativ zu der Trägereinrichtung 28 noch weiter zurückversetzt. Hierfür ist die Lagereinrichtung 30 an der Innenseite der Trägereinrichtung 28 linear versetzbar gelagert.

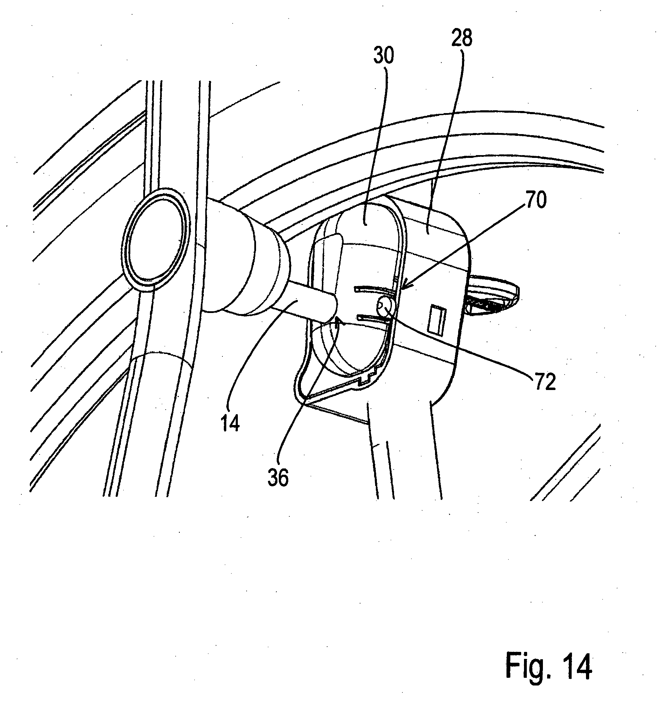

Um ein unbeabsichtigtes Versetzen der genannten Einheit in die Wartungsstellung zu verhindern, kann die Schließbolzenhalterung 12 eine Festlegeeinrichtung aufweisen. Wie in Fig. 14 dargestellt, kann die Festlegeeinrichtung durch eine an der Lagereinrichtung 30 vorgesehene Rasteinrichtung 70 gebildet sein.

Die Rasteinrichtung 70 umfasst einen Rastabschnitt 72, der an der die Öffnung 36 aufweisenden Rückseite der Lagereinrichtung 30 ausgebildet ist. Der Rastabschnitt 72 hintergreift in seiner Grundstellung einen Randabschnitt der Trägereinrichtung 28 und verrastet damit die Lagereinrichtung 30 mit der Trägereinrichtung 28.

Zum Überführen der die Betätigungseinrichtung 32, den Schließbolzen 14 und die Lagereinrichtung 30 umfassenden Einheit in die Wartungsstellung muss der Rastabschnitt 72 niedergedrückt werden, so dass er an der Innenwand der Trägereinrichtung 28 vorbeigleiten kann. Die Lagereinrichtung 30 kann dann zusammen mit der Betätigungseinrichtung 32 und dem Schließbolzen 14 in die Wartungsstellung verschoben werden.

Mit neuerlichem Bezug auf die Fig. 1 bis 3 werden nun die besondere Ausgestaltung und Wirkungsweise der Schließbolzenaufnahme 16 erläutert.

Das Aufnahmeteil 26 ist an dem Lagerteil 24 lösbar gehalten, um durch Lösen des Aufnahmeteils 26 eine Montage oder Demontage des Rads 20 zu ermöglichen oder zu vereinfachen, wenn der Schließbolzen 14 sich in der Öffnungsstellung (Fig. 2) oder Wartungsstellung (Fig. 3) befindet. Ein Lösen des Aufnahmeteils 26 von dem Lagerteil 24 ist jedoch nur in einer Lösestellung des Aufnahmeteils 26 möglich. Hierzu ist das Aufnahmeteil 26 an dem Lagerteil 24 zwischen einer Sicherungsstellung (Fig. 1 und 2) und der genannten Lösestellung drehbar gelagert. In der Sicherungsstellung ist das Aufnahmeteil 26 an dem Lagerteil 24 durch Formschluss gegen ein Lösen gesichert.

Das Lösen bzw. Befestigen des Aufnahmeteils 26 am Lagerteil 24 erfolgt somit durch eine Verdrehbewegung des Aufnahmeteils 26 um seine Drehachse A, welche der Längsachse des zylindrischen Lagerteils 24 entspricht. Die Befestigung des Aufnahmeteils 26 am Lagerteil 24 (Sicherungsstellung gemäß Fig. 1 und 2) kann beispielsweise durch eine Verschraubung oder durch eine Bajonettverriegelung erfolgen.

Die Aufnahmeöffnung 22 ist derart lateral in Bezug auf die Drehachse A des Aufnahmeteils 26 versetzt, dass der Schließbolzen 14 nur dann mit der Aufnahmeöffnung 22 fluchtet, wenn das Aufnahmeteil 26 in seiner Sicherungsstellung am Lagerteil 24 gesichert ist. Aufgrund dieses Versatzes kann das Aufnahmeteil 26 nur dann in seine Lösestellung verdreht und von dem Lagerteil 24 gelöst werden, wenn sich der Schließbolzen 14 außerhalb der Aufnahmeöffnung 22 befindet, d.h. wenn sich der Schließbolzen 14 in seiner Öffnungsstellung oder Wartungsstellung befindet.

Mit anderen Worten greift der Schließbolzen 14 in seiner Schließstellung (Fig. 1) in die exzentrisch angeordnete Aufnahmeöffnung 22 des in seiner Sicherungsstellung befindlichen Aufnahmeteils 26 ein. Hierdurch ist das Aufnahmeteil 26 gegen ein Verdrehen in seine Lösestellung blockiert. Wenn also der Schließbolzen in seine Schließstellung versetzt ist, ist das Aufnahmeteil 26 der Schließbolzenaufnahme 16 inhärent an dem Lagerteil 24 gesichert.

### Bezugszeichenliste

- 10: Rahmenschloss
- 12: Schließbolzenhalterung
- 14: Schließbolzen
- 15: distales Ende
- 16: Schließbolzenaufnahme
- 17: proximales Ende
- 18a, 18b: Gabelrohr
- 20: Rad
- 22: Aufnahmeöffnung
- 24: Lagerteil
- 26: Aufnahmeteil
- 28: Trägereinrichtung
- 30: Lagereinrichtung
- 32: Betätigungseinrichtung
- 34: Gehäuse
- 36: Öffnung
- 38, 38': Kopplungseinrichtung
- 40: Hebel
- 42a, 42b, 42c: Stift
- 43: Schlüssel
- 44: Betätigungsfläche
- 46a, 46b: Zahnstange
- 48: Zahnrad
- 50: Schließzylinder
- 52: Riegel
- 54a, 54b: Verriegelungsabschnitt
- 56a, 56b: Riegelaufnahme
- 58: Nut
- 60: Zapfen
- 62: Langloch
- 64: Verstärkungsblech
- 66: Klobenaufnahme
- 68: Kloben
- 69: Haube
- 70: Rasteinrichtung
- 72: Rastabschnitt
- A: Drehachse

## Patentansprüche

1. Rahmenschloss für ein Zweirad, mit einem länglichen Schließbolzen (14), welcher an einer Schließbolzenhalterung (12) zwischen einer Schließstellung und einer Öffnungsstellung entlang seiner Längsachse versetzbar gehalten ist,
**dadurch gekennzeichnet,**
**dass** der Schließbolzen (14) ausgehend von der Öffnungsstellung zusätzlich in eine der Schließstellung gegenüberliegende Wartungsstellung versetzbar ist.

2. Rahmenschloss nach Anspruch 1
**dadurch gekennzeichnet,**
**dass** das Rahmenschloss (10) an der Schließbolzenhalterung (12) ferner eine Verriegelungseinrichtung (50, 52) aufweist, die in eine Verriegelungsstellung verstellbar ist, um den Schließbolzen (14) in dessen Schließstellung gegen ein Versetzen zu blockieren, wobei der Schließbolzen (14) unabhängig von der Stellung der Verriegelungseinrichtung (50, 52) von der Öffnungsstellung in die Wartungsstellung versetzbar ist.

3. Rahmenschloss nach Anspruch 2,
**dadurch gekennzeichnet,**
**dass** das Rahmenschloss (10) an der Schließbolzenhalterung (12) ferner eine von der Verriegelungseinrichtung (50, 52) funktional unabhängige Festlegeeinrichtung (70) aufweist, die den Schließbolzen (14) ausgehend von dessen Öffnungsstellung in Richtung der Wartungsstellung lösbar festlegt;
wobei die Festlegeeinrichtung (70) vorzugsweise eine Rastverbindung (70) umfasst.

4. Rahmenschloss nach Anspruch 2 oder 3,
**dadurch gekennzeichnet,**
**dass** die Schließbolzenhalterung (12) eine Trägereinrichtung (28) und eine Betätigungseinrichtung (32) aufweist, an der der Schließbolzen (14) versetzbar gehalten ist und die relativ zu der Trägereinrichtung (28) zwischen einer Schließstellung, einer Öffnungsstellung und einer Wartungsstellung versetzbar ist, wobei die Verriegelungseinrichtung (50, 52) mit dem Schließbolzen (14), der Betätigungseinrichtung (32) und der Trägereinrichtung (28) derart zusammenwirkt, dass in der Schließstellung der Betätigungseinrichtung (32) und der Schließstellung des Schließbolzens (14) die Verriegelungseinrichtung (50, 52) in ihrer Verriegelungsstellung die Betätigungseinrichtung (32) und den Schließbolzen (14) gegen ein Versetzen relativ zu der Trägereinrichtung (28) blockiert und dass ausgehend von der Öffnungsstellung der Betätigungseinrichtung (32) und der Öffnungsstellung des Schließbolzens (14) die Betätigungseinrichtung (32) gemeinsam mit dem Schließbolzen (14) in die Wartungsstellung versetzbar ist, selbst wenn die Verriegelungseinrichtung (50, 52) sich in ihrer Verriegelungsstellung befindet.

5. Rahmenschloss nach Anspruch 4,
**dadurch gekennzeichnet,**
**dass** die Schließbolzenhalterung (12) ferner eine Lagereinrichtung (30) aufweist, wobei die Betätigungseinrichtung (32) über die Lagereinrichtung (30) indirekt an der Trägereinrichtung (28) versetzbar gehalten ist.

6. Rahmenschloss nach Anspruch 5,
**dadurch gekennzeichnet,**
**dass** die Betätigungseinrichtung (32) an der Lagereinrichtung (30) zwischen ihrer Schließstellung und ihrer Öffnungsstellung versetzbar gehalten ist, wobei die Lagereinrichtung (30) an der Trägereinrichtung (28) zwischen einer Betriebsstellung und einer Wartungsstellung versetzbar gehalten ist;
wobei die Verriegelungseinrichtung (50, 52) mit dem Schließbolzen (14), der Betätigungseinrichtung (32), der Lagereinrichtung (30) und der Trägereinrichtung (28) derart zusammenwirkt, dass in der Betriebsstellung der Lagereinrichtung (30), der Schließstellung der Betätigungseinrichtung (32) und der Schließstellung des Schließbolzens (14) die Verriegelungseinrichtung (50, 52) in ihrer Verriegelungsstellung die Lagereinrichtung (30), die Betätigungseinrichtung (32) und den Schließbolzen (14) gegen ein Versetzen relativ zu der Trägereinrichtung (28) blockiert und dass ausgehend von der Betriebsstellung der Lagereinrichtung (30), der Öffnungsstellung der Betätigungseinrichtung (32) und der Öffnungsstellung des Schließbolzens (14) die Lagereinrichtung (30) gemeinsam mit der Betätigungseinrichtung (32) und dem Schließbolzen (14) in die Wartungsstellung versetzbar ist, selbst wenn die Verriegelungseinrichtung (50, 52) sich in ihrer Verriegelungsstellung befindet.

7. Rahmenschloss nach einem der Ansprüche 4 bis 6,
**dadurch gekennzeichnet,**
**dass** die Verriegelungseinrichtung (50, 52) an der Betätigungseinrichtung (32) vorgesehen ist, wobei die Verriegelungseinrichtung (50, 52) einen Schließzylinder (50) und einen mittels des Schließzylinders (50) zwischen einer Verriegelungsstellung und einer Entriegelungsstellung versetzbaren Riegel (52) aufweist, wobei in der Schließstellung der Betätigungseinrichtung (32) und der Schließstellung des Schließbolzens (14) der Riegel (52) in seiner Verriegelungsstellung mit einem am Schließbolzen (14) vorgesehenen Blockierabschnitt (17) und einem an der Trägereinrichtung (28) vorgesehenen Verriegelungsabschnitt (56a) zusammenwirkt.

8. Rahmenschloss nach einem der Ansprüche 4 bis 7,
**dadurch gekennzeichnet,**
**dass** die Betätigungseinrichtung (32) mit dem Schließbolzen (14) über eine Kopplungseinrichtung (38, 38') gekoppelt ist, die eine Betätigungsbewegung der Betätigungseinrichtung (32) in eine sich von der Betätigungsbewegung unterscheidende Verstellbewegung des Schließbolzens (14) umsetzt.

9. Rahmenschloss nach Anspruch 8,
**dadurch gekennzeichnet,**
**dass** die Betätigungseinrichtung (32) an der Schließbolzenhalterung (12) linear versetzbar gehalten ist, wobei die Kopplungseinrichtung (38, 38') eine lineare Betätigungsbewegung der Betätigungseinrichtung (32) in eine lineare Verstellbewegung des Schließbolzens (14) umsetzt.

10. Rahmenschloss nach Anspruch 9,
**dadurch gekennzeichnet,**
**dass** die lineare Betätigungsbewegung der Betätigungseinrichtung (32) bezüglich der linearen Verstellbewegung des Schließbolzens (14) parallel ist;
und/oder
**dass** die lineare Betätigungsbewegung der Betätigungseinrichtung (32) und die lineare Verstellbewegung des Schließbolzens (14) gleichsinnig gerichtet sind.

11. Rahmenschloss nach einem der vorhergehenden Ansprüche,
**dadurch gekennzeichnet,**
**dass** das Rahmenschloss (10) zur Integration in eine Gabel eines Rahmens des Zweirads vorgesehen ist, insbesondere zur Integration in zumindest eine Durchbrechung eines Gabelrohrs (18a, 18b).

12. Rahmenschloss nach einem der vorhergehenden Ansprüche,
**dadurch gekennzeichnet,**
**dass** in der Schließstellung das distale Ende (15) des Schließbolzens (14) in einer Schließbolzenaufnahme (16) aufgenommen ist.

13. Rahmenschloss nach Anspruch 12,
**dadurch gekennzeichnet,**
**dass** die Schließbolzenaufnahme (16) ein Lagerteil (24) und ein Aufnahmeteil (26) umfasst, wobei das Aufnahmeteil (26) an dem Lagerteil (24) zwischen einer Sicherungsstellung und einer Lösestellung versetzbar gelagert ist, wobei das Aufnahmeteil (26) in seiner Sicherungsstellung an dem Lagerteil (24) gegen ein Lösen gesichert und in seiner Lösestellung von dem Lagerteil (24) lösbar ist, wobei das Aufnahmeteil (26) eine Aufnahmeöffnung (22) aufweist, in die der Schließbolzen (14) eingreift, wenn der Schließbolzen (14) sich in seiner Schließstellung und das Aufnahmeteil (26) sich in seiner Sicherungsstellung befindet, wobei der in die Aufnahmeöffnung (22) eingreifende Schließbolzen (14) das Aufnahmeteil (26) gegen ein Versetzen aus der Sicherungsstellung in die Lösestellung blockiert.

14. Rahmenschloss nach Anspruch 13,
**dadurch gekennzeichnet,**
**dass** das Aufnahmeteil (26) an dem Lagerteil (24) zwischen der Sicherungsstellung und der Lösestellung um eine Drehachse (A) drehbar gelagert ist, wobei die Drehachse (A) bezüglich der Aufnahmeöffnung (22) des Aufnahmeteils (26) und/oder der Längsachse des Schließbolzens (14) versetzt ist.

15. Rahmenschloss nach Anspruch 12,
**dadurch gekennzeichnet,**
**dass** die Schließbolzenaufnahme (16) ein Lagerteil (24), ein Aufnahmeteil (26) und ein Sperrglied umfasst, welches zwischen einer Freigabestellung und einer Sperrstellung versetzbar ist, wobei das Sperrglied in seiner Freigabestellung das Aufnahmeteil (26) für ein Lösen von dem Lagerteil (24) freigibt und in seiner Sperrstellung das Aufnahmeteil gegen ein Lösen von dem Lagerteil sperrt, und wobei der Schließbolzen (14) in seiner Schließstellung das Sperrglied in der Sperrstellung blockiert.

## Claims

1. A frame lock for a two-wheeler having an elongate locking bolt (14) which is held at a locking bolt holder (12) displaceable along its longitudinal axis between a closed position and an open position,
**characterised in that**
the locking bolt (14) can additionally be displaced, starting from the open position, into a maintenance position disposed opposite the closed position.

2. A frame lock in accordance with claim 1
**characterised in that**
the frame lock (10) furthermore has a locking device (50, 52) at the locking bolt holder (12), the locking device being adjustable into a locked position to block the locking bolt (14) against a displacement in its closed position, with the locking bolt (14) being adjustable from the open position into the maintenance position independently of the position of the locking device (50, 52).

3. A frame lock in accordance with claim 2,
**characterised in that**
the frame lock (10) furthermore has a fixing device (70) at the locking bolt holder (12), the fixing device being functionally independent of the locking device (50, 52) and fixing the locking bolt (14) releasably, starting from its open position, in the direction of the maintenance position,
with the fixing device (70) preferably comprising a latch connection (70).

4. A frame lock in accordance with claim 2 or claim 3,
**characterised in that**
the locking bolt holder (12) has a carrier device (28) and an actuation device (32) at which the locking bolt (14) is displaceably held and which is displaceable relative to the carrier device (28) between a closed position, an open position and a maintenance position, with the locking device (50, 52) cooperating with the locking bolt (14), with the actuation device (32) and with the carrier device (28) such that, in the closed position of the actuation device (32) and in the closed position of the locking bolt (14), the locking device (50, 52) in its locked position blocks the actuation device (32) and the locking bolt (14) against a displacement relative to the carrier device (28); and **in that**, starting from the open position of the actuation device (32) and from the open position of the locking bolt (14), the actuation device (32) can be displaced together with the locking bolt (14) into the maintenance position, even when the locking device (50, 52) is in its locked position.

5. A frame lock in accordance with claim 4,
**characterised in that**
the locking bolt holder (12) further has a bearing device (30), with the actuation device (32) being held indirectly at the carrier device (28) displaceable via the bearing device (30).

6. A frame lock in accordance with claim 5,
**characterised in that**
the actuation device (32) is held at the bearing device (30) displaceable between its closed position and its open position, with the bearing device (30) being held at the carrier device (28) displaceable between an operating position and a maintenance position,
with the locking device (50, 52) cooperating with the locking bolt (14), with the actuation device (32), with the bearing device (30) and with the carrier device (28) such that, in the operating position of the bearing device (30), in the closed position of the actuation device (32) and in the closed position of the locking bolt (14), the locking device (50, 52) in its locked position blocks the bearing device (30), the actuation device (32) and the locking bolt (14) against a displacement relative to the carrier device (28); and **in that**, starting from the operating position of the bearing device (30), from the open position of the actuation device (32) and from the open position of the locking bolt (14), the bearing device (30) can be displaced together with the actuation device (32) and the locking bolt (14) into the maintenance position even when the locking device (50, 52) is in its locked position.

7. A frame lock in accordance with any one of the claims 4 to 6,
**characterised in that**
the locking device (50, 52) is provided at the actuation device (32), with the locking device (50, 52) having a lock cylinder (50) and a latch (52) displaceable between a locked position and an unlocked position by means of the lock cylinder (50), with the latch (52) cooperating in its locked position, in the closed position of the actuation device (32) and in the closed position of the locking bolt (14), with a blocking section (17) provided at the locking bolt (14) and with a locking section (56a) provided at the carrier device (28).

8. A frame lock in accordance with any one of the claims 4 to 7,
**characterised in that**
the actuation device (32) is coupled to the locking bolt (14) via a coupling device (38, 38') which converts an actuation movement of the actuation device (32) into an adjustment movement of the locking bolt (14) differing from the actuation movement.

9. A frame lock in accordance with claim 8,
**characterised in that**
the actuation device (32) is held linearly displaceable at the locking bolt holder (12), with the coupling device (38, 38') converting a linear actuation movement of the actuation device (32) into a linear adjustment movement of the locking bolt (14).

10. A frame lock in accordance with claim 9,
**characterised in that**
the linear actuation movement of the actuation device (32) is in parallel with respect to the linear adjustment movement of the locking bolt (14);
and/or
**in that** the linear actuation movement of the actuation device (32) and the linear adjustment movement of the locking bolt (14) are directed in the same sense.

11. A frame lock in accordance with any one of the preceding claims,
**characterised in that**
the frame lock (10) is provided for integration into a fork of a frame of the two-wheeler, in particular for integration into at least one opening of a fork bar (18a, 18b).

12. A frame lock in accordance with any one of the preceding claims,
**characterised in that**
the distal end (15) of the locking bolt (14) is received in a locking bolt mount (16) in the closed position.

13. A frame lock in accordance with claim 12,
**characterised in that**
the locking bolt mount (16) comprises a bearing part (24) and a mount part (26), with the mount part (26) being supported at the bearing part (24) displaceable between a securing position and a release position, with the mount part (26) being secured against release in its securing position at the bearing part (24) and being releasable from the bearing part (24) in its release position, with the mount part (26) having a mount opening (22) into which the locking bolt (14) engages when the locking bolt (14) is in its closed position and the mount part (26) is in its securing position and with the locking bolt (14) engaging into the mount opening (22) blocking the mount part (26) against a displacement from the securing position into the release position.

14. A frame lock in accordance with claim 13,
**characterised in that**
the mount part (26) is supported at the bearing part (24) between the securing position and the release position rotatable about an axis of rotation (A), with the axis of rotation (A) being displaced with respect to the mount opening (22) of the mount part (26) and/or the longitudinal axis of the locking bolt (14).

15. A frame lock in accordance with claim 12,
**characterised in that**
the locking bolt mount (16) comprises a bearing part (24), a mount part (26) and a blocking member which is displaceable between a release position and a blocked position, with the blocking member releasing the mount part (26) for release from the bearing part (24) in its release position and blocking the mount part against release from the bearing part in its blocking position, and with the locking bolt (14) blocking the blocking member in the blocked position in its closed position.

## Revendications

1. Antivol sur cadre pour un deux-roues, comprenant un goujon de fermeture allongé (14), qui est maintenu sur une monture de goujon de fermeture (12) avec possibilité de déplacement le long de son axe longitudinal entre une position fermée et une position ouverte,
**caractérisé en ce que** le goujon de fermeture (14) est capable de se déplacer, partant de la position ouverte, en supplément jusque dans une position d'attente à l'opposé de la position fermée.

2. Antivol sur cadre selon la revendication 1,
**caractérisé en ce que** l'antivol sur cadre (10) comprend en outre sur la monture de goujon de fermeture (12) un moyen de verrouillage (50, 52) qui peut être amené dans une position de verrouillage afin de bloquer le goujon de fermeture (14) dans sa position fermée à l'encontre d'un déplacement, dans lequel le goujon de fermeture (14) est déplaçable depuis la position ouverte jusque dans la position d'attente indépendamment de la position du moyen de verrouillage (50, 52).

3. Antivol sur cadre selon la revendication 2,
**caractérisé en ce que** l'antivol sur cadre (10) comprend en outre sur la monture de goujon de fermeture (12) un dispositif d'immobilisation (70) fonctionnellement indépendant du moyen de verrouillage (50, 52), qui immobilise le goujon de fermeture (14) de manière libérable en partant de sa position ouverte en direction de la position d'attente ;
et le dispositif d'immobilisation (70) inclut de préférence une liaison à enclenchement (70).

4. Antivol sur cadre selon la revendication 2 ou 3,
**caractérisé en ce que** la monture de goujon de fermeture (12) comprend un moyen porteur (28) et un moyen d'actionnement (32) sur lequel le goujon de fermeture (14) est maintenu de façon déplaçable, et qui est déplaçable par rapport au moyen porteur (28) entre une position fermée, une position ouverte, et une position d'attente, dans lequel le moyen de verrouillage (50, 52) coopère avec le goujon de fermeture (14), avec le moyen d'actionnement (32) et avec le moyen porteur (28) de telle façon que, dans la position fermée du moyen d'actionnement (32) et dans la position fermée du goujon de fermeture (14), le moyen de verrouillage (50, 52) bloque le moyen d'actionnement (32) et le goujon de fermeture (14) à l'encontre d'un déplacement par rapport au moyen porteur (28), et **en ce que**, en partant de la position ouverte du moyen d'actionnement (32) et de la position ouverte du goujon de fermeture (14), le moyen d'actionnement (32) est déplaçable conjointement avec le goujon de fermeture (14) jusque dans la position d'attente, même si le moyen de verrouillage (50, 52) se trouve dans sa position de verrouillage.

5. Antivol sur cadre selon la revendication 4,
**caractérisé en ce que** la monture du goujon de fermeture (12) comprend en outre un moyen de montage (30), et le moyen d'actionnement (32) est maintenu de façon déplaçable indirectement sur le moyen porteur (28) par l'intermédiaire du moyen de montage (30).

6. Antivol sur cadre selon la revendication 5,
**caractérisé en ce que** le moyen d'actionnement (32) est maintenu sur le moyen de montage (30) de manière déplaçable entre sa position fermée et sa position ouverte, le moyen de montage (30) étant maintenu sur le moyen porteur (28) de manière déplaçable entre une position de service et une position d'attente ;
dans lequel le moyen de verrouillage (50, 52) coopère avec le goujon de fermeture (14), avec le moyen d'actionnement (32), avec le moyen de montage (30) et avec le moyen porteur (28) de telle façon que, dans la position de service du moyen de montage (30), dans la position fermée du moyen d'actionnement (32) et dans la position fermée du goujon de fermeture (14), le moyen de verrouillage (50, 52) dans sa position de verrouillage bloque le moyen de montage (30), le moyen d'actionnement (32) et le goujon de fermeture (14) à l'encontre d'un déplacement par rapport au moyen porteur (28), et **en ce que**, en partant de la position de service du moyen de montage (30), de la position ouverte du moyen d'actionnement (32) et de la position ouverte du goujon de fermeture (14), le moyen de montage (30) peut être déplacé conjointement avec le moyen d'actionnement (32) et avec le goujon de fermeture (14) jusque dans la position d'attente, même si le moyen de verrouillage (50, 52) se trouve dans sa position de verrouillage.

7. Antivol sur cadre selon l'une des revendications 4 à 6,
**caractérisé en ce que** le moyen de verrouillage (50, 52) est prévu sur le moyen d'actionnement (32), de telle façon que le moyen de verrouillage (50, 52) comprend un cylindre de fermeture (50) et un verrou (52) déplaçable au moyen du cylindre de fermeture (50) entre une position verrouillée et une position déverrouillée, et de sorte que dans la position fermée du moyen d'actionnement (32) et dans la position fermée du goujon de fermeture (14) le verrou (52) dans sa position verrouillée coopère avec un tronçon de blocage (17) prévu sur le goujon de fermeture (14) et avec un tronçon de verrouillage (56a) prévu sur le moyen porteur (28).

8. Antivol sur cadre selon l'une des revendications 4 à 7,
**caractérisé en ce que** le moyen d'actionnement (32) est couplé avec le goujon de fermeture (14) via un moyen de couplage (38, 38') qui convertit un mouvement d'actionnement du moyen d'actionnement (32) en un mouvement de déplacement du goujon de fermeture (14) qui diffère du mouvement d'actionnement.

9. Antivol sur cadre selon la revendication 8,
**caractérisé en ce que** le moyen d'actionnement (32) est maintenu déplaçable de façon linéaire sur la monture de goujon de fermeture (12), et le moyen de couplage (38, 38') convertit un mouvement d'actionnement linéaire du moyen d'actionnement (32) en un mouvement de déplacement linéaire du goujon de fermeture (14).

10. Antivol sur cadre selon la revendication 9,
**caractérisé en ce que** le mouvement d'actionnement linéaire du moyen d'actionnement (32) est parallèle par rapport au mouvement de déplacement linéaire du goujon de fermeture (14) ;
et/ou
**en ce que** le mouvement d'actionnement linéaire du moyen d'actionnement (32) et le mouvement de déplacement linéaire du goujon de fermeture (14) sont orientés dans le même sens.

11. Antivol sur cadre selon l'une des revendications précédentes,
**caractérisé en ce que** l'antivol sur cadre (10) est prévu pour être intégré dans une fourche d'un cadre du deux-roues, en particulier pour être intégré dans au moins une traversée d'un tube de fourche (18a, 18b).

12. Antivol sur cadre selon l'une des revendications précédentes,
**caractérisé en ce que**, dans la position fermée, l'extrémité distale (15) du goujon de fermeture (14) est logé dans un logement (16) pour goujon de fermeture.

13. Antivol sur cadre selon la revendication 12,
**caractérisé en ce que** le logement (16) pour goujon de fermeture inclut une partie de montage (24) et une partie de logement (26), la partie de logement (26) étant montée sur la partie de montage (24) de manière déplaçable entre une position de blocage et une position de libération, dans lequel la partie de logement (26) est bloquée, dans sa position de blocage, sur la partie de montage (24) à l'encontre d'une libération et est libérable depuis la partie de montage (24) dans sa position de libération, dans lequel la partie de logement (26) comporte une ouverture de logement (22) dans laquelle s'engage le goujon de fermeture (14) quand le goujon de fermeture (14) se trouve dans sa position fermée et que la partie de logement (26) se trouve dans sa position de blocage, et le goujon de fermeture (14) qui s'engage dans l'ouverture de logement (22) bloque la partie de logement (26) à l'encontre d'un déplacement hors de la position de blocage jusque dans la position de libération.

14. Antivol sur cadre selon la revendication 13,
**caractérisé en ce que** la partie de logement (26) est montée sur la partie de montage (24) de manière rotative autour d'un axe de rotation (A) entre la position de blocage et la position de libération, et dans lequel l'axe de rotation (A) est décalé par rapport à l'ouverture de logement (22) de la partie de logement (26) et/ou à l'axe longitudinal du goujon de fermeture (14).

15. Antivol sur cadre selon la revendication 12,
**caractérisé en ce que** le logement (16) pour goujon de fermeture inclut une partie de montage (24), une partie de logement (26) et un organe de blocage, qui peut être déplacé entre une position de libération et une position de blocage, dans lequel l'organe de blocage, dans sa position de libération, libère la partie de logement (26) pour une libération depuis la partie de montage (24) et, dans sa position de blocage, bloque la partie de logement (26) en l'encontre d'un détachement depuis la partie de montage (24), et le goujon de fermeture (14), dans sa position fermée, bloque l'organe de blocage dans la position de blocage.
